# EUROPÄISCHE PATENTSCHRIFT

(11) **EP 3 126 188 B1**
(45) Veröffentlichungstag und Bekanntmachung des Hinweises auf die Patenterteilung: **05.06.2024**
(21) Anmeldenummer: 15730729.9
(22) Anmeldetag: 12.06.2015
(51) Int. Cl.: B60N 2/58

(54) **VERFAHREN ZUR HERSTELLUNG EINES MIT EINEM BEZUG VERSEHENEN ELEMENTES UND EIN SOLCHES ELEMENT**
PROCESS FOR MANUFACTURING OF AN ELEMENT COVERED BY A COVER AND SUCH AN ELEMENT
PROCÉDÉ POUR LA FABRICATION D'UN ÉLÉMENT COUVERT DE TEXTILE ET CET ÉLÉMENT

(30) Priorität: 13.06.2014 DE 102014211374
(43) Veröffentlichungstag der Anmeldung: 08.02.2017
(73) Patentinhaber: Adient US LLC, Plymouth, MI 48170 (US)
(72) Erfinder: SCHULZE, Uwe, 51149 Köln (DE)
(74) Vertreter: Finger, Catrin
(86) Internationale Anmeldenummer: PCT/EP2015/063181
(87) Internationale Veröffentlichungsnummer: WO 2015/189394

(56) Entgegenhaltungen:
- DE-A1-102011 087 499
- US-A- 5 110 649

## Beschreibung

Die Erfindung betrifft ein Verfahren zur Herstellung eines mit einem Bezug versehenen Elementes, insbesondere eines mit einem Sitzbezug versehenen Fahrzeugsitzes. Des Weiteren betrifft die Erfindung ein solches Element, insbesondere einen Fahrzeugsitz.

Zur Herstellung eines insbesondere gepolsterten Elementes, wie eines Fahrzeugsitzes, sind verschiedene Verfahren bekannt. Beispielsweise ist als Herstellungsverfahren ein Hinterschäumverfahren eines Sitzbezuges aus der DE 100 59 471 A1 bekannt, wobei der Sitzbezug fest mit dem Schaumteil verbunden und gegenüber dem Schaumteil unbeweglich ist.

In einem weiteren bekannten Verfahren wird der Bezug auf einen Träger des Elementes, insbesondere auf einen Schaumkörper oder ein anderes Formteil, aufgenäht oder an diesem abgeheftet oder mittels angenähter oder angeschweißter Einzugsstäbe, Drähte oder Klipse befestigt, wie beispielsweise in der DE 101 56 658 C1 beschrieben. Hierbei kann es zu Ausbeulungen in der Oberfläche des Bezuges kommen.

Aus der US 5,110,649 A ist eine trennbare Befestigung für einen Bezug bekannt, welche auf der Unterseite des Bezugs angeordnet ist.

Aufgabe der vorliegenden Erfindung ist es, ein gegenüber dem Stand der Technik verbessertes Verfahren zur Herstellung eines mit einem Bezug versehenen Elementes anzugeben. Darüber hinaus ist es Aufgabe der Erfindung, ein Element mit einer verbesserten Kontur anzugeben.

Hinsichtlich des Verfahrens wird die Aufgabe durch die im Patentanspruch 1 angegebenen Merkmale gelöst. Hinsichtlich des Elementes wird die Aufgabe durch die im Patentanspruch 10 angegebenen Merkmale gelöst.

Beim erfindungsgemäßen Verfahren zur Herstellung eines mit einem nahtlosen Bezug versehenen Elementes wird an einer von der sichtbaren Oberflächenseite des Bezuges abgewandten nicht sichtbaren Oberflächenseite eine Ausformung fixiert und die fixierte Ausformung stoffschlüssig mit dem Bezug verbunden.

Mit anderen Worten: Die Ausformung wird und ist auf der nicht sichtbaren Seite des Bezuges angeordnet.

Alternativ kann die Ausformung bei einem mit einer Kaschierung versehenen nahtlosen Bezug an der Kaschierung, insbesondere an einer vom Bezug abgewandten Oberflächenseite der Kaschierung, fixiert sein.

Dabei wird die Ausformung zur Bildung einer vorgegebenen, insbesondere konkaven und/oder konvexen, Außenkontur des Elementes in oder auf eine Oberflächenseite einer Kaschierung ein- bzw. aufgebracht, um ein Ausbeulen des nahtlosen Bezuges zu vermeiden.

Die Ausformung wird beispielsweise mit mindestens einer Naht fixiert. Alternativ kann die Ausformung angeheftet oder geklebt werden. Dabei kann die Ausformung direkt oder indirekt an der Kaschierung fixiert werden.

Die Kaschierung und/oder der Bezug sind/ist hierzu entsprechend dem zu beziehenden Element, zum Beispiel einem Sitzteil oder einer Sitzlehne, zugeschnitten. Vor dem Fixieren der Ausformung wird die Kaschierung mit dem Bezug stoffschlüssig verbunden, insbesondere unter Druck und Temperatur, insbesondere niedrige Temperaturen, miteinander verklebt. Je nach Art der Kaschierung, zum Beispiel Klebe- oder Flammkaschierung, kann die Kaschierung auf den Bezug auch aufgespritzt, hinterspritzt, hinterschäumt, angeschäumt, angeschmolzen oder verklebt werden.

Ein mit einer solchen Kaschierung mit fixierter Ausformung in Art einer Unterwabe und einem solchen Bezug gepolstertes Element weist eine ausgeformte und nahtfreie Oberfläche und somit eine durch die mindestens eine Ausformung gebildete homogene Außenkontur ohne sichtbare Beulen, Nähte, Schweißnähte oder sichtbare Befestigungen auf. Dabei weist insbesondere der Bezug eine konturgenaue Passform zu der profilierten, insbesondere konvexen und/oder konkaven, Außenkontur der Kaschierung und somit des zu polsternden Elementes, insbesondere dessen Trägerelementes, ohne sogenannte Ausbeulungen oder Trommeleffekten auf.

Erfindungsgemäss wird als Ausformung eine Lasche, Tasche oder Schlaufe (auch listing pocket genannt) an den Bezug oder an/in die Kaschierung eingebracht oder aufgebracht. Zusätzlich ist die Ausformung auf der nicht sichbaren Oberflächenseite des Bezugs oder auf der vom Bezug abgewandten Oberfläche der Kaschierung an einer Trägereinheit, insbesondere einen Kunststoff-Formkörper eines Sitzteils oder einer Sitzlehne, beispielsweise mittels eines Klettbands oder Schlingen und Haken fixiert.

In einer Weiterbildung ist vorgesehen, dass die Ausformung indirekt auf den Bezug oder auf die Kaschierung aufgebracht wird. Dabei wird die Ausformung zunächst an einem Träger, insbesondere ein Stoff, ein Gewebe, ein Gestricke oder ein Gewirke, fixiert, beispielsweise genäht, geklebt oder geheftet.

Der Träger mit der fixierten Ausformung wird dann mit der ausformungsfreien Oberflächenseite mit dem Bezug oder mit der Kaschierung stoffschlüssig verbunden, insbesondere geklebt. Dabei kann der Träger bereits mit einem Klebemittel versehen sein, insbesondere durchtränkt sein. Alternativ kann eine Klebeschicht auf der entsprechenden Oberflächenseite des Trägers aufgebracht sein.

Eine weitere Ausführungsform sieht vor, dass in einen Hohlraum der Ausformung ein Stützelement, insbesondere ein Schlaufband, ein Stab, ein Clips oder ein Draht, eingebracht wird.

Des Weiteren kann in den Bezug eine Prägung, eine Stickerei, ein Siebdruck, ein Inkjet-Druck oder ein Offset-Druck vor der Verbindung mit der Kaschierung eingebracht sein. Dabei sind Design-Elemente, wie ein Muster, eine Ziernaht, eine Prägung, ein Siebdruck oder ein Inkjet-Druck, vor der Verbindung des Bezuges mit der Kaschierung in den Bezug beispielsweise mittels entsprechender Werkzeugmaschinen, insbesondere einer CNC-Maschine, einbringbar. Durch die nahtfreie Ausbildung des Bezuges, insbesondere eines Sitzbezuges, können derartige Design-Elemente, insbesondere Muster, Ziernähte, Prägungen, ein Siebdruck oder ein Inkjet-Druck, ohne einen Versatz der Design-Elemente, beispielsweise des Musters oder der Ziernaht, in den Bezug eingebracht werden. Ferner kann die Anzahl der Zuschnittteile des Bezuges und/oder der Kaschierung sowie die Anzahl der manuellen Nähoperationen reduziert werden.

In einer möglichen Ausführungsform wird als Kaschierung eine thermoplastische Folie verwendet, die nach der Verbindung mit dem Bezug auf einer Trägereinheit des Elementes aufgebracht werden kann. Als Kaschierung kann auch ein alternatives Kaschiermaterial, insbesondere ein Vlies oder ein Gewebe oder ein anderes Natur-Kunststoff-Faservlies oder ein Schaumstoff, verwendet werden. Eine solche Kaschierung unterstützt die Formgebung des Bezuges und kann zusätzlich als Dehnungsbremse fungieren. Bevorzugt weist die Kaschierung eine Dicke von mehreren Millimetern, insbesondere von 1 Millimeter bis 10 mm, beispielsweise mehr als 3 Millimetern oder mehr auf, so dass auf eine zusätzliche Polsterwatte verzichtet werden kann.

Optional kann auf der vom Bezug abgewandten Oberflächenseite der Kaschierung oder auf der nicht sichtbaren Oberflächenseite des Bezuges ein Armierungselement aufgebracht werden. Das Armierungselement ist insbesondere ein Armierungsgewebe, zum Beispiel ein Gestrick, ein Gewirke oder ein Vlies.

In dieser Ausführungsform wird der mit der fixierten Ausformung versehene Träger mit der von der Ausformung abgewandten Oberflächenseite auf das Armierungselement aufgebracht.

Das erfindungsgemäße Element, insbesondere ein Fahrzeugsitz, ist mit einem nahtlosen Bezug ohne Kaschierung oder mit einem auf einer Kaschierung angeordneten nahtlosen Bezug versehen, wobei eine Ausformung an einer von der sichtbaren Oberflächenseite des Bezuges abgewandten nicht sichtbaren Oberflächenseite oder an einer vom Bezug abgewandten Oberflächenseite der Kaschierung fixiert ist und die fixierte Ausformung in oder auf der nicht sichtbaren Oberflächenseite des Bezuges oder auf der vom Bezug abgewandten Oberflächenseite der Kaschierung ein- bzw. aufgebracht und stoffschlüssig mit dem Bezug verbunden ist.

Zur Bildung einer konkaven und/oder konvexen und insbesondere beulenfreien Außenkontur des Elementes ist die Ausformung in oder auf der nicht sichtbaren Bezugsoberflächenseite oder in oder auf der Oberflächenseite der Kaschierung ein- bzw. aufgebracht und beispielsweise mit mindestens einer Naht fixiert. Dabei kann die Ausformung auf der nicht sichtbaren Oberflächenseite des Bezuges oder auf der vom Bezug abgewandten Oberflächenseite der Kaschierung direkt oder indirekt an dieser fixiert sein. Bevorzugt ist diese indirekt fixiert.

Hierzu ist die zugeschnittene Kaschierung mit dem Bezug zunächst stoffschlüssig, insbesondere unter Druck und/oder Temperatur, verklebt oder verschmolzen. Je nach Art der stoffschlüssigen Verbindung, zum Beispiel Flammkaschierung oder Klebekaschierung, und der Art des Materials, zum Beispiel Vlies, Gewirke, Folie oder Schaum, kann der Bezug mit einer Vlies-, Gewebe-, Folien- oder Schaumkaschierung versehen sein.

Erfindungsgemäss wird die Ausformung als eine Lasche, Tasche oder Schlaufe in oder an den Bezug oder die Kaschierung eingebracht oder aufgebracht. Des Weiteren kann in einen Hohlraum der Ausformung ein Stützelement, insbesondere ein Schlaufband, ein Stab, ein Clips oder ein Draht, eingebracht sein.

Bei der indirekten Fixierung ist die Ausformung auf einen Träger fixiert und der Träger ist stoffschlüssig mit dem Bezug oder mit der Kaschierung verbunden. Beispielsweise ist die Ausformung auf den Träger genäht oder mechanisch verbunden, beispielsweise geheftet, oder auch geklebt. Der Träger der Ausformung ist beispielsweise aus einem Stoff, einem Textil, einem Gewebe, einem Gestrick oder einem Gewirke gebildet und ermöglicht eine einfache Fixierung der Ausformung.

Zusätzlich ist die Ausformung in Richtung einer den Polsterkörper bildenden Trägereinheit an dieser fixiert, beispielsweise mittels einer Klettverbindung (Klettband) oder einer Haken-Ösen/Schlingen-Verbindung oder einer Heftverbindung.

Eine Weiterbildung sieht vor, dass die Kaschierung aus einer thermoplastischen Folie gebildet ist, die auf einer Trägereinheit des Elementes, insbesondere des Sitzteils oder der Sitzlehne aufgebracht ist. Alternativ kann die Kaschierung aus einem Schaumstoff, einem Vliesstoff oder einer Kunststoff-Folie gebildet sein. In einer möglichen Ausführungsform ist die Trägereinheit aus einem Kunststoff-Formkörper oder einem Naturstoff-Formkörper oder einem Schaum-Formkörper, insbesondere einem Polyurethanschaum-Körper gebildet.

Zwischen der Kaschierung und der Ausformung oder zwischen dem Bezug und der Ausformung ist optional ein Armierungselement, insbesondere ein Stoff, ein Gewebe, ein Vlies, angeordnet.

Ausführungsbeispiele der Erfindung werden anhand der beigefügten schematischen Figuren näher beschrieben. Dabei zeigen:
- Fig. 1A bis 1C: schematisch einen vergrößerten Ausschnitt verschiedener Ausführungsbeispiele einer Kaschierung und eines Bezuges für ein insbesondere nahtfrei gepolstertes Element,
- Fig. 1D: schematisch einen vergrößerten Ausschnitt eines Ausführungsbeispiels eines nahtlosen Bezuges ohne Kaschierung für ein nahtfrei gepolstertes Element,
- Fig. 2A bis 2E: schematisch in perspektivischer Darstellung, von vorne und im Querschnitt ein Ausführungsbeispiel für ein nahtfrei gepolstertes Element, und
- Fig. 3: schematisch in perspektivischer Darstellung in Seitenansicht ein weiteres Ausführungsbeispiel für ein nahtfrei gepolstertes Element.

Einander entsprechende Teile sind in allen Figuren mit den gleichen Bezugszeichen versehen.

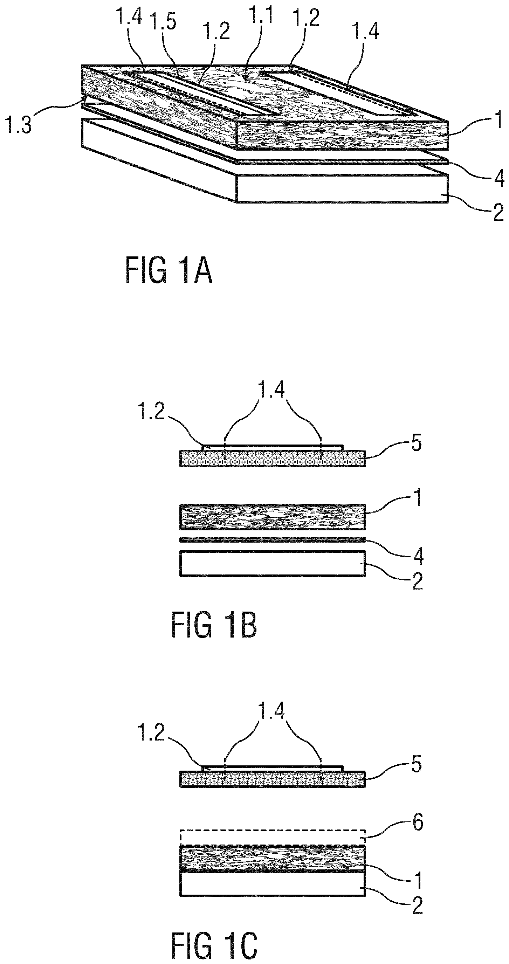

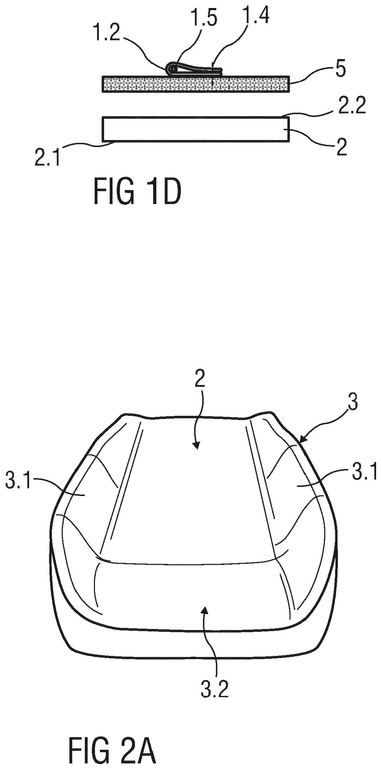

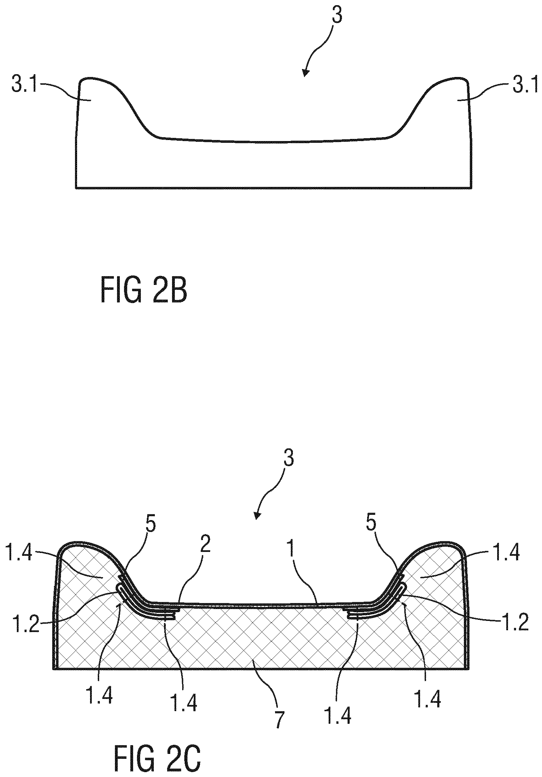

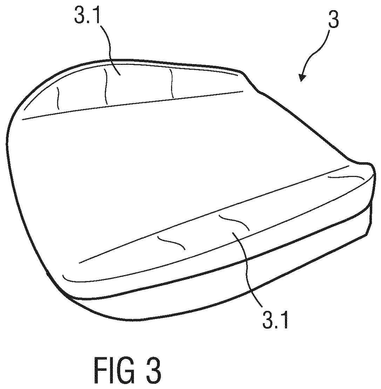

Die **Figuren 1A bis 1C** zeigen in Explosionsdarstellung und Schnittdarstellungen einen vergrößerten Ausschnitt verschiedener Ausführungsbeispiele einer Kaschierung 1 und eines nahtlosen Bezuges 2 für ein in den **Figuren 2A****,** **2B** **und** **3** dargestelltes, insbesondere gepolstertes Element 3.

Das Element 3 kann ein Fahrzeugsitz, ein Sitzteil, eine Sitzlehne oder ein anderes gepolstertes Teil sein. Der Bezug 2 kann insbesondere aus einem Textil, einem Leder oder einem anderen Naturmaterial oder Naturgewebe gebildet sein. Das Element 3 umfasst zur Ausbildung einer gewünschten Außenkontur, insbesondere von optisch sichtbaren Polsterzonen, die Kaschierung 1, welche zumindest auf einer Oberflächenseite 1.1 mit einer zu einer gewünschten beulenfreien Außenkontur korrespondierenden Ausformung 1.2 versehen ist, und eine Trägereinheit 7, insbesondere ein Schaumpolster, zur Ausbildung von Seitenbacken 3.1 und Querbacken 3.2, wie beispielsweise in Figuren 2A bis 2D dargestellt.

Die Ausformung 1.2 in der Kaschierung 1 kann beispielsweise als eine Lasche, eine Tasche oder Schlaufe eingebracht oder aufgebracht sein. Im Ausführungsbeispiel nach **Figur 1A** ist die Ausformung 1.2 auf der vom Bezug 2 abgewandten Oberflächenseite 1.1 der Kaschierung 1 ausgebildet.

Alternativ kann die Ausformung in nicht näher dargestellter Art und Weise auf der dem Bezug 2 zugewandten Oberflächenseite 1.3 oder auf beiden Oberflächenseiten 1.1 und 1.3 ausgebildet sein.

In die Kaschierung 1 nach Figur 1A sind zwei seitliche Ausformungen 1.2 eingebracht, welche beispielsweise bei einem als ein Fahrzeugsitz oder als ein Sitzteil ausgebildeten Element 3 beulenfreie Seitenwangen oder Seitenbacken 3.1 bilden, wie in Figuren 2A bis 3 dargestellt. Alternativ oder zusätzlich können mittels weiterer nicht dargestellter Ausformungen 1.2 beulenfreie Querbacken 3.2 oder Querwangen, insbesondere an einer Vorderkante und/oder einer Hinterkante, eines als ein Sitzelement ausgebildeten Elementes 3 ausgebildet sein.

Das Element 3 umfasst dabei die die Außenkonturen mit Seitenbacken 3.1 und Querbacken 3.2 bildende innere Trägereinheit 7, auf welche die in Figuren 1A bis 1C dargestellten verschiedenartigen Außenkomposite aufgebracht werden.

In der einfachsten Ausführungsform nach Figur 1A umfasst ein auf die Trägereinheit 7 aufbringbares Außenkomposit den mit der Kaschierung 1 kaschierten Bezug 2, wobei die Kaschierung 1 zumindest abschnittsweise, insbesondere im Bereich von Seitenbacken 3.1 und/oder Querbacken 3.2, Ausformungen 1.2 auf der vom Bezug 2 abgewandten Oberflächenseite 1.1 umfasst. Die Ausformungen 1.2 sind in diesem Ausführungsbeispiel direkt an der Kaschierung 1 fixiert, beispielsweise mittels einer Naht 1.4. Zusätzlich kann die jeweilige, beispielsweise laschenförmige Ausformung 1.2 mit einem Stützelement 1.5, insbesondere einem Draht, einen Stab oder einen Clips, versehen sein.

In einer alternativen Ausführungsform nach Figur 1B umfasst ein auf die Trägereinheit 7 aufbringbares Außenkomposit den mit der Kaschierung 1 kaschierten Bezug 2. Die Ausformungen 1.2 sind in diesem Ausführungsbeispiel auf einem Träger 5 fixiert, der wiederum mit der von der Ausformung 1.2 abgewandten Oberflächenseite auf die Kaschierung 1 aufgebracht und stoffschlüssig mit dieser verbunden wird. Der Bezug 2 ist beispielsweise ein Leder. Bei Leder als Bezug 2 ist bzw. wird die Kaschierung 1, zum Beispiel ein Vlies oder ein Gewirke, mittels eines Klebemittels 4 mit dem Bezug 2 stoffschlüssig verbunden.

In einer weiteren alternativen Ausführungsform nach Figur 1C umfasst ein auf die Trägereinheit 7 aufbringbares Außenkomposit den mit der Kaschierung 1 kaschierten Bezug 2. Dabei ist oder wird die Kaschierung 1, zum Beispiel ein thermoplastisches Material, wie eine Schaumfolie oder ein Textil, direkt auf den aus einem Gewebe gebildeten Bezug 2 durch Schmelzen aufgebracht (= Flammkaschierung). Die Ausformungen 1.2 sind in diesem Ausführungsbeispiel auf dem Träger 5 fixiert. An der Kaschierung 1 ist zusätzlich ein Armierungselement 6 angeordnet und stoffschlüssig mit dieser verbunden. Der Träger 5 mit den fixierten Ausformungen 1.2 wird mit der von der/den Ausformung/en 1.2 abgewandten Oberflächenseite auf das Armierungselement 6 aufgebracht und stoffschlüssig mit diesem verbunden.

Die Ausformungen 1.2 werden gemäß den verschiedenen Ausführungsformen vor einem Verbinden der Kaschierung 1 mit dem Bezug 2 oder mit dem Träger 5 in oder auf die Kaschierung 1 bzw. in oder auf den Träger 5 ein- bzw. aufgebracht. Die als eine Lasche Schlaufe oder eine Tasche ausgebildete Ausformung 1.2 kann zusätzlich mittels einer Naht 1.4 an der Kaschierung 1 oder den Träger 5 befestigt werden. Alternativ kann die Ausformung 1.2 geklebt oder geheftet werden. **Figur 1D** zeigt schematisch einen vergrößerten Ausschnitt eines weiteren Ausführungsbeispiels eines nahtlosen Bezuges 2 ohne Kaschierung für ein nahtfrei gepolstertes Element 3. Der Bezug 2 weist eine eine Sitzfläche bildende Oberflächenseite 2.1 und eine davon abgewandte nicht sichtbare Oberflächenseite 2.2 auf. Die Ausformung 1.2 kann in diesem Ausführungsbeispiel direkt oder indirekt auf der nicht sichtbaren Oberflächenseite 2.2 stoffschlüssig mit dem Bezug 2 verbunden sein.

In Figur 1D ist die Ausformung 1.2 optional an dem Träger 5 fixiert, der wiederum stoffschlüssig mit dem Bezug 2 an dessen nicht sichtbaren Oberflächenseite 2.2 verbunden, insbesondere geklebt, ist.

Zusätzlich kann in einen Hohlraum der Ausformung 1.2 ein Stützelement 1.5, insbesondere ein Schlaufband, ein Stab, ein Clips oder ein Draht, eingebracht sein.

In einer möglichen Ausführungsform ist die Kaschierung 1 aus einer thermoplastischen Folie gebildet. Alternativ kann die Kaschierung 1 aus einem Abstandsgewirke, insbesondere einem 3D-Abstandsgewirke, einem Vlies, einem Kunststoff, einem Hybridmaterial, insbesondere einem Kunststoffgewebe, oder einem anderen gewebten oder nichtgewebten Material gebildet sein.

Die Kaschierung 1 mit den auf- oder eingebrachten und gegebenenfalls zusätzlich fixierten, insbesondere genähten, geklebten, gehefteten oder geclipsten, Ausformungen 1.2 ist mit dem Bezug 2 stoffschlüssig verbunden. Hierzu kann zwischen der Kaschierung 1 und dem Bezug 2 ein Klebemittel 4, insbesondere ein Kaschierungsklebstoff, eingebracht sein. Die Kaschierung 1 und der Bezug 2 werden anschließend in einem insbesondere kombinierten Press- und Trocknungsvorgang unter einem vorgegebenen Druck und/oder bei einer vorgegebenen Temperatur miteinander stoffschlüssig verbunden. Dabei wird das Klebemittel 4 auf einer Rückseite 2.1 des Bezuges 2, insbesondere der der Kaschierung 1 zugewandten Oberflächenseite und/oder auf einer dem Bezug 2 zugewandten Oberflächenseite 1.3 der Kaschierung 1 aufgebracht. Anschließend kann der mit der Kaschierung 1 versehene Bezug 2 mit der beispielsweise konvex und/oder konkav ausgebildeten Außenkontur infolge der Ausformungen 1.2 der Kaschierung 1 oder der Ausformungen 1.2 des Trägers 5 zusätzlich in nicht näher dargestellter Art und Weise auf die Trägereinheit 7, insbesondere einen Polsterträger oder -körper, des Elementes 3 aufgebracht und dort befestigt, beispielsweise geheftet, geklammert oder geklipst oder geklebt, sein. Die Trägereinheit 7 ist beispielsweise aus einem Kunststoff-Formkörper oder einem Naturstoff-Formkörper gebildet.

**Figur 1B** zeigt das Ausführungsbeispiel mit der indirekten Anbringung der Ausformung 1.2 an einem separaten Träger 5. Dabei ist die Ausformung 1.2 auf dem separaten Träger 5 fixiert, insbesondere mittels Nähten 1.4 fixiert. Der Träger 5 ist insbesondere aus einem Stoff, beispielsweise einem Textil, einem Gewebe, einem Gestrick oder einem Gewirke gebildet.

In diesem Ausführungsbeispiel wird der Bezug 2 mit der Kaschierung 1 vorgefertigt und zugeschnitten. Anschließend wird der Träger 5 mit der fixierten Ausformung 1.2 mit der von der Ausformung 1.2 abgewandten Oberflächenseite mit der Kaschierung 1 verbunden, insbesondere stoffschlüssig verbunden, beispielsweise verklebt.

Hierzu ist beispielsweise der Träger 5 mit einem Klebemittel versehen. Alternativ kann der Träger 5 mit einem Klebemittel getränkt sein.

**Figur 1C** zeigt ein weiteres Ausführungsbeispiel mit der indirekten Anbringung der Ausformung 1.2 an einem separaten Träger 5, wobei die Kaschierung 1 optional mit einem Armierungselement 6 auf der vom Bezug 2 abgewandten Oberflächenseite 1.1 der Kaschierung 1 versehen wird und ist. Das Armierungselement 6 ist insbesondere als ein Armierungsgewebe, zum Beispiel ein Gewirke, ein Vlies oder ein Gestrick, ausgebildet und stoffschlüssig mit der Kaschierung 1 verbunden, insbesondere geklebt.

Das Verfahren zur Herstellung des mit dem nahtlosen Bezug 2 ohne Kaschierung 1 versehenen Elementes 3 zur Bildung einer konkaven und/oder konvexen Außenkontur umfasst dabei in einer einfachen Ausführungsform folgende Schritte:
- Ein- oder Aufbringen zumindest einer Ausformung 1.2, in Form einer textilen Lasche, Schlaufe oder Tasche, in oder auf die nicht sichtbare Oberflächenseite 2.2 des Bezuges 2, und
- Fixieren der Ausformung 1.2 an dem Bezug 2, sowie
- Stoffschlüssiges Verbinden der fixierten Ausformung 1.2 mit dem Bezug 2.

Ein weiteres alternatives Verfahren zur Herstellung des mit dem nahtlosen Bezug 2 und der Kaschierung 1 versehenen Elementes 3 zur Bildung einer konkaven und/oder konvexen Außenkontur umfasst dabei in einer einfachen Ausführungsform folgende Schritte:
- Verbinden eines nahtlosen Bezuges 2 mit einer Kaschierung 1:
- Ein- oder Aufbringen zumindest einer Ausformung 1.2, in Form einer textilen Lasche, Schlaufe oder Tasche, in oder auf eine vom Bezug 2 abgewandten Oberflächenseite 1.1 der Kaschierung 1, und
- Fixieren der Ausformung 1.2 an der vom Bezug 2 abgewandten Oberflächenseite 1.1 der Kaschierung 1, sowie
- Stoffschlüssiges Verbinden der fixierten Ausformung 1.2 mit dem Bezug 2.

Darüber hinaus kann bei einem indirekten Anbringen der Ausformung 1.2 an die Kaschierung 1 des bereits kaschierten Bezuges 2 oder an dem Bezug 2 selbst die Ausformung 1.2 zunächst an den Träger 5 angebracht und fixiert, beispielsweise genäht oder geheftet, werden. Anschließend wird der Träger 5 mit der befestigten Ausformung 1.2 mit der von der Ausformung 1.2 abgewandten Oberflächenseite auf die Kaschierung 1 des bereits kaschierten Bezuges 2 oder den Bezug 2 aufgebracht und stoffschlüssig mit diesem verbunden, insbesondere geklebt.

Eine weitere Option sieht vor, dass auf der vom Bezug 2 abgewandten Oberflächenseite 1.1 der Kaschierung 1 oder der nicht sichtbaren Oberflächenseite 2.2 des Bezuges 2 das Armierungselement 6 angeordnet und fixiert, insbesondere geklebt ist. Das Armierungselement 6 ist beispielsweise ein Gestrick, ein Gewirke, ein Vlies und ist adhesiv mit der Kaschierung 1 verbunden.

Im Fall eines Armierungselements 6 wird dann der Träger 5 auf das Armierungselement 6 auf dessen von der Kaschierung 1 abgewandten Oberflächenseite oder auf der nicht sichtbaren Oberflächenseite 2.2 des Bezuges 2 aufgebracht.

Die Kaschierung 1 weist insbesondere eine Dicke von 1 mm bis 10 mm, insbesondere von mehr als 3 mm, auf. Das optionale Armierungselement 6 oder die Unterware der Kaschierung 1 weist eine Dicke von 0,5 mm bis 1,5 mm, insbesondere von ungefähr 1 mm, auf. Der Träger 5 weist insbesondere eine Dicke von 0,5 mm bis 1,5 mm, insbesondere von ungefähr 1 mm, auf.

Eine weitere Ausführungsform des Verfahrens zur Herstellung sieht folgende Schritte vor:
- Ein- oder Aufbringen zumindest einer Ausformung 1.2, in Form einer textilen Lasche, Schlaufe oder Tasche, in oder auf eine vom Bezug 2 abgewandte Oberflächenseite 1.1 der Kaschierung 1 oder auf die nicht sichtbare Oberflächenseite 2.2 des Bezuges 2,
- Optional Einbringen mindestens eines Stützelementes 1.5, insbesondere eines Drahtes, Schlaufbandes, Fangbandes und/oder einer Trennwand in die Ausformung 1.2, insbesondere in einen durch die Ausformung 1.2 gebildeten Hohlraum,
- Fixierung der Ausformung 1.2 auf der Kaschierung 1 oder dem Bezug 2 beispielsweise mittels mindestens einer Naht 1.4 oder einem Clips,
- Optional separates Einbringen von Designelementen, insbesondere von Mustern, Ziernähten, Stickereien, Prägungen, Siebdruck, Inkjet-Druck, Offset-Druck, in den Bezug 2 vor einem Befestigen, insbesondere stoffschlüssiges Verbinden, der Kaschierung 1 und des Bezuges 2,
- Zuschneiden der Kaschierung 1 und/oder des Bezuges 2, und
- Stoffschlüssiges Verbinden der zugeschnittenen Kaschierung 1 mit dem zugeschnitten Bezug 2 unter konturgenauer und nahtfreier Formung des Bezuges 2 an der ausgeformten, insbesondere konvex und/oder konkav ausgeformten Kaschierung 1.

Durch die separate Einbringung von Designelementen in den Bezug 2 vor einem Kaschiervorgang ist die Anzahl der Zuschnittteile und der manuellen Nähoperationen gegenüber herkömmlichen mechanischen Fixierverfahren deutlich reduziert. Zudem können vorab Muster ohne einen Versatz in den Bezug 2 eingebracht werden.

In einer möglichen Weiterbildung ist zumindest im Bereich der Ausformung 1.2 in den Bezug 2 mindestens eine Prägung, eine Stickerei, ein Siebdruck, ein Inkjet-Druck oder ein Offset-Druck eingebracht. Diese Einbringung von Designelementen in den Bezug 2 erfolgt vor dem Kaschiervorgang.

**Figuren 2A bis 2D** zeigen schematisch in perspektivischer Darstellung, von vorne und im Querschnitt ein Ausführungsbeispiel für ein nahtfrei gepolstertes Element 3 mit durch entsprechend ausgebildeten Ausformungen 1.2 in der Kaschierung 1 ausgeformten Seitenbacken 3.1. Alternativ oder zusätzlich können weitere Ausformungen 1.2 in der Kaschierung 1 eingebracht sein, die beispielsweise eine Querbacke 3.2 in der Außenkontur an der Vorderkante oder Hinterkante des Elementes 3 ausbilden.

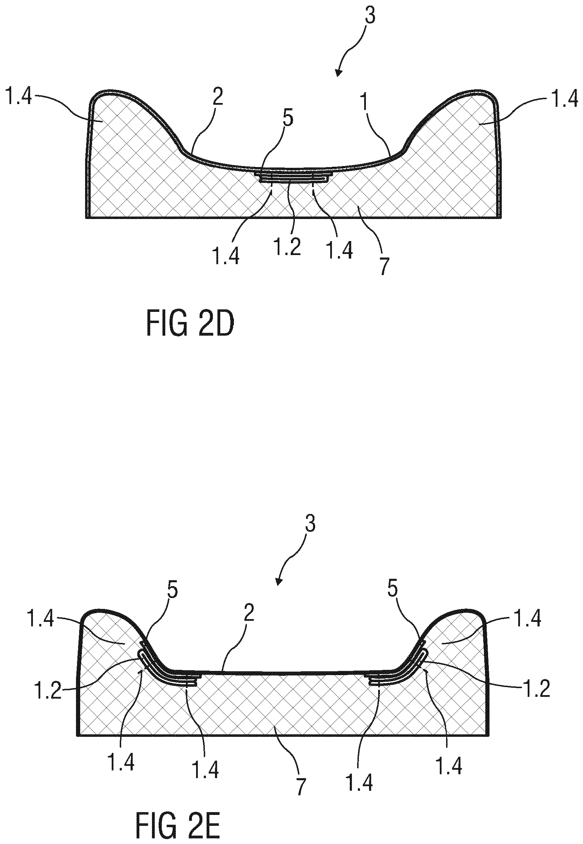

Wie **Figur 2C** zeigt, ist oder sind dabei die Ausformung/en 1.2 nur abschnittsweise mittels des Trägers 5 oder direkt an der Kaschierung 1, insbesondere in konkav geformte Bereiche des Elements 3, angeordnet und fixiert. Im Ausführungsbeispiel nach Figur 2C sind zwei Ausformungen 1.2 im Übergangsbereich zu den Seitenbacken 3.1 vorgesehen. Darüber hinaus können weitere Ausformungen 1.2 im mittleren Sitzflächenbereich (wie in Figur 2D dargestellt) und/oder im Bereich der Querbacken 3.2 (nicht dargestellt) angeordnet sein. Die Ausformungen 1.2 sind beispielhaft für ein als Sitzteil ausgebildetes Element 3 dargestellt; diese können aber auch in ein als Sitzlehne ausgebildetes Element 3 in entsprechenden Bereichen vorgesehen sein.

**Figur 2D** zeigt ein als Sitzteil ausgebildetes Element 3 mit einer konkav geformten Sitzfläche. Dabei ist oder sind die Ausformung/en 1.2 im konkav geformten Sitzbereich des Elements 3 abschnittsweise mittels des Trägers 5 oder direkt an der Kaschierung 1 angeordnet und fixiert. Insbesondere sind die Ausformungen 1.2 an der tiefsten Stelle des konkav geformten Bereiches angeordnet.

**Figur 2E** zeigt schematisch in perspektivischer Darstellung ein als Sitzteil ausgebildetes Element 3, wobei der Bezug 2 ohne Kaschierung ausgebildet ist. In diesem Ausführungsbeispiel ist oder sind die Ausformungen 1.2 abschnittsweise in konkav ausgebildeten Sitzbereichen des Elements 3 auf der nicht sichtbaren Oberflächenseite 2.2 am Bezug 2 fixiert und dort stoffschlüssig mit dem Bezug 2 verbunden. Optional kann zwischen dem Bezug 2 und der Ausformung 1.2 der Träger 5 angeordnet sein. Dabei wird die Ausformung 1.2 zunächst am Träger 5 fixiert und dieser wird anschließend stoffschlüssig mit dem Bezug 2 verbunden.

**Figur 3** zeigt schematisch in perspektivischer Darstellung in Seitenansicht ein weiteres Ausführungsbeispiel für ein nahtfrei gepolstertes Element 3, das ein Sitzteil mit Seitenbacken 3.1 bildet.

### Bezugszeichenliste

- 1: Kaschierung
- 1.1, 1.3: Oberflächenseite
- 1.2: Ausformung
- 1.4: Naht
- 1.5: Stützelement
- 2: Bezug
- 2.1: sichtbare Oberflächenseite
- 2.2: nicht sichtbare Oberflächenseite
- 3: Element
- 3.1: Seitenbacke
- 3.2: Querbacke
- 4: Klebemittel
- 5: Träger
- 6: Armierungselement
- 7: Trägereinheit

## Patentansprüche

1. Verfahren zur Herstellung eines mit einem nahtlosen Bezug (2) versehenen Elementes (3), insbesondere eines Fahrzeugsitzes, wobei
- eine Ausformung (1.2) auf einem Träger (5) aufgebracht und am Träger (5) fixiert wird, und wobei
- der mit der fixierten Ausformung (1.2) versehene Träger (5) mit der ausformungsfreien Oberflächenseite an einer von der sichtbaren Oberflächenseite (2.1) des Bezuges (2) abgewandten nicht sichtbaren Oberflächenseite (2.2) aufgebracht und stoffschlüssig mit dem Bezug (2) verbunden wird und wobei der nahtlose Bezug (2) eine durch die Ausformung (1.2) gebildete homogene Außenkontur aufweist, wobei die Ausformung (1.2) zunächst am Träger (5) fixiert und dieser anschließend stoffschlüssig mit dem Bezug (2) verbunden wird, wobei die Ausformung (1.2) als Lasche, Tasche oder Schlaufe aufgebracht wird.

2. Verfahren nach Anspruch 1, **dadurch gekennzeichnet, dass** bei einem mit einer Kaschierung (1) versehenen Bezug (2) die Ausformung (1.2) an einer vom Bezug (2) abgewandten Oberflächenseite (1.1) der Kaschierung (1) aufgebracht und fixiert wird.

3. Verfahren nach Anspruch 2, **dadurch gekennzeichnet, dass** der Träger (5) stoffschlüssig mit der Kaschierung (1) des Bezuges (2) verbunden wird.

4. Verfahren nach einem der vorhergehenden Ansprüche, **dadurch gekennzeichnet, dass** in einen Hohlraum der Ausformung (1.2) ein Stützelement (1.5) eingebracht wird.

5. Verfahren nach einem der vorhergehenden Ansprüche, **dadurch gekennzeichnet, dass** in den Bezug (2) zumindest im Bereich der Ausformung (1.2) mindestens eine Prägung, eine Stickerei, ein Siebdruck, ein Inkjet-Druck oder ein Offset-Druck eingebracht wird.

6. Verfahren nach einem der Ansprüche 2 bis 5, **dadurch gekennzeichnet, dass** als Kaschierung (1) eine Folie, ein Schaumstoff, ein Vliesstoff oder eine thermoplastische Folie verwendet wird.

7. Verfahren nach einem der Ansprüche 2 bis 6, **dadurch gekennzeichnet, dass** auf der vom Bezug (2) abgewandten Oberflächenseite (1.1) der Kaschierung (1) ein Armierungselement (6) aufgebracht wird.

8. Verfahren nach einem der Ansprüche 1, 4 oder 5, **dadurch gekennzeichnet, dass** auf der nicht sichtbaren Oberflächenseite (2.2) des Bezuges (2) ein Armierungselement (6) aufgebracht wird.

9. Verfahren nach Anspruch 7 oder 8, **dadurch gekennzeichnet, dass** der mit der fixierten Ausformung (1.2) versehene Träger (5) mit der von der Ausformung (1.2) abgewandten Oberflächenseite auf das Armierungselement (6) aufgebracht wird.

10. Element (3), insbesondere Fahrzeugsitz, versehen mit einem auf einer Kaschierung (1) nahtlos angeordneten Bezug (2), wobei
- eine Ausformung (1.2) auf einem Träger (5) aufgebracht und am Träger (5) fixiert ist,
- und der mit der fixierten Ausformung (1.2) versehene Träger (5) mit der ausformungsfreien Oberflächenseite () an einer von der sichtbaren Oberflächenseite (2.1) des Bezuges (2) abgewandten nicht sichtbaren Oberflächenseite (2.2) aufgebracht und fixiert ist und stoffschlüssig mit dem Bezug (2) verbunden ist, wobei der nahtlose Bezug (2) eine durch die Ausformung (1.2) gebildete homogene Außenkontur aufweist, wobei die Ausformung (1.2) als Lasche, Tasche oder Schlaufe in die oder an die Kaschierung (1) eingebracht bzw. aufgebracht ist.

11. Element (3) nach Anspruch 10, **dadurch gekennzeichnet, dass** die Kaschierung (1) aus einer Kunststoff-Folie, einem Schaumstoff, einem Vliesstoff oder einer thermoplastischen Folie gebildet ist.

12. Element (3) nach einem der Ansprüche 10 oder 11, **dadurch gekennzeichnet, dass** der Träger (5) aus einem Stoff, einem Textil, einem Gewebe, einem Gestrick oder einem Gewirke gebildet ist.

13. Element (3) nach einem der Ansprüche 10 bis 12, **dadurch gekennzeichnet, dass** zwischen Kaschierung (1) und Ausformung (1.2) oder zwischen Bezug (2) und Ausformung (1.2) ein Armierungselement (6) und/oder der Träger (5) angeordnet sind bzw. ist.

## Claims

1. Method for producing an element (3) provided with a seamless cover (2), in particular a vehicle seat, wherein
- a moulding (1.2) is applied to a carrier (5) and secured to the carrier (5), and wherein
- the carrier (5) provided with the secured moulding (1.2) is applied to a non-visible surface side (2.2) facing away from the visible surface side (2.1) of the cover (2) with the moulding-free surface side and is connected to the cover (2) by a material bond, and wherein the seamless cover (2) has a homogeneous outer contour formed by the moulding (1.2), wherein the moulding (1.2) is first of all secured to the carrier (5) and the latter is subsequently connected to the cover (2) by a material bond, wherein the moulding (1.2) is applied as a tab, pocket or loop.

2. Method according to Claim 1, **characterized in that** in the case of a cover (2) provided with a lining (1), the moulding (1.2) is applied and secured to a surface side (1.1) of the lining (1) that faces away from the cover (2).

3. Method according to Claim 2, **characterized in that** the carrier (5) is connected to the lining (1) of the cover (2) by a material bond.

4. Method according to one of the preceding claims, **characterized in that** a support element (1.5) is introduced into a cavity in the moulding (1.2).

5. Method according to one of the preceding claims, **characterized in that** at least one impression, piece of embroidery, screen print, inkjet print or offset print is introduced into the cover (2) at least in the region of the moulding (1.2).

6. Method according to one of Claims 2 to 5, **characterized in that** a film, a foam, a nonwoven or a thermoplastic film is used as the lining (1).

7. Method according to one of Claims 2 to 6, **characterized in that** a reinforcing element (6) is applied to that surface side (1.1) of the lining (1) that faces away from the cover (2).

8. Method according to one of Claims 1, 4 or 5, **characterized in that** a reinforcing element (6) is applied to the non-visible surface side (2.2) of the cover (2).

9. Method according to Claim 7 or 8, **characterized in that** the carrier (5) provided with the secured moulding (1.2) is applied to the reinforcing element (6) with the surface side that faces away from the moulding (1.2).

10. Element (3), in particular vehicle seat, provided with a cover (2) arranged seamlessly on a lining (1), wherein
- a moulding (1.2) has been applied to a carrier (5) and secured to the carrier (5),
- and the carrier (5) provided with the secured moulding (1.2) has been applied and secured to a non-visible surface side (2.2) facing away from the visible surface side (2.1) of the cover (2) with the moulding-free surface side () and has been connected to the cover (2) by a material bond, wherein the seamless cover (2) has a homogeneous outer contour formed by the moulding (1.2), wherein the moulding (1.2) has been introduced or applied as a tab, pocket or loop into the or to the lining (1).

11. Element (3) according to Claim 10, **characterized in that** the lining (1) is formed from a synthetic film, a foam, a nonwoven or a thermoplastic film.

12. Element (3) according to either of Claims 10 and 11, **characterized in that** the carrier (5) is formed from a cloth material, a textile, a woven fabric, a knit or a warp-knit.

13. Element (3) according to one of Claims 10 to 12, **characterized in that** a reinforcing element (6) and/or the carrier (5) are/is arranged between the lining (1) and the moulding (1.2) or between the cover (2) and the moulding (1.2).

## Revendications

1. Procédé de fabrication d'un élément (3) pourvu d'un revêtement (2) sans joint, notamment d'un siège de véhicule,
- une formation (1.2) étant appliquée sur un support (5) et fixée au support (5), et
- le support (5) pourvu de la formation (1.2) fixée étant appliqué avec le côté de surface sans formation sur un côté de surface non visible (2.2) détourné du côté de surface visible (2.1) du revêtement (2) et étant relié au revêtement (2) par liaison de matière, et le revêtement (2) sans joint présentant un contour extérieur homogène formé par la formation (1.2), la formation (1.2) étant d'abord fixée au support (5) et celui-ci étant ensuite relié au revêtement (2) par liaison de matière, la formation (1.2) étant appliquée sous forme de languette, de poche ou de boucle.

2. Procédé selon la revendication 1, **caractérisé en ce que**, dans le cas d'un revêtement (2) pourvu d'un contre-collage (1), la formation (1.2) est appliquée et fixée sur un côté de surface (1.1) du contre-collage (1) détourné du revêtement (2).

3. Procédé selon la revendication 2, **caractérisé en ce que** le support (5) est relié au contre-collage (1) du revêtement (2) par liaison de matière.

4. Procédé selon l'une quelconque des revendications précédentes, **caractérisé en ce qu'**un élément de soutien (1.5) est introduit dans une cavité de la formation (1.2).

5. Procédé selon l'une quelconque des revendications précédentes, **caractérisé en ce qu'**au moins un gaufrage, une broderie, une sérigraphie, une impression par jet d'encre ou une impression offset est introduit dans le revêtement (2) au moins dans la zone de la formation (1.2).

6. Procédé selon l'une quelconque des revendications 2 à 5, **caractérisé en ce qu'**un film, une mousse, un non-tissé ou un film thermoplastique est utilisé en tant que contre-collage (1).

7. Procédé selon l'une quelconque des revendications 2 à 6, **caractérisé en ce qu'**un élément d'armature (6) est appliqué sur le côté de surface (1.1) du contre-collage (1) détourné du revêtement (2).

8. Procédé selon l'une quelconque des revendications 1, 4 ou 5, **caractérisé en ce qu'**un élément d'armature (6) est appliqué sur le côté de surface non visible (2.2) du revêtement (2).

9. Procédé selon la revendication 7 ou 8, **caractérisé en ce que** le support (5) pourvu de la formation fixée (1.2) est appliqué sur l'élément d'armature (6) avec le côté de surface détourné de la formation (1.2).

10. Élément (3), notamment siège de véhicule, pourvu d'un revêtement (2) agencé sans joint sur un contre-collage (1),
- une formation (1.2) étant appliquée sur un support (5) et fixée au support (5),
- et le support (5) pourvu de la formation (1.2) fixée étant appliqué et fixé avec le côté de surface () sans formation sur un côté de surface non visible (2.2) détourné du côté de surface visible (2.1) du revêtement (2) et étant relié au revêtement (2) par liaison de matière, le revêtement (2) sans joint présentant un contour extérieur homogène formé par la formation (1.2), la formation (1.2) étant introduite ou appliquée sous forme de languette, de poche ou de boucle dans ou sur le contre-collage (1).

11. Élément (3) selon la revendication 10, **caractérisé en ce que** le contre-collage (1) est formé d'un film de matière plastique, d'une mousse, d'un non-tissé ou d'un film thermoplastique.

12. Élément (3) selon l'une quelconque des revendications 10 ou 11, **caractérisé en ce que** le support (5) est formé d'une étoffe, d'un textile, d'un tissu, d'un tricot ou d'une maille.

13. Élément (3) selon l'une quelconque des revendications 10 à 12, **caractérisé en ce qu'**un élément d'armature (6) et/ou le support (5) est ou sont agencé(s) entre le contre-collage (1) et la formation (1.2) ou entre le revêtement (2) et la formation (1.2).
